# EUROPÄISCHE PATENTANMELDUNG

(11) **EP 2 743 525 A2**
(43) Veröffentlichungstag der Anmeldung: **18.06.2014**
(21) Anmeldenummer: 13196055.1
(22) Anmeldetag: 06.12.2013
(51) Int. Cl.: F16C 33/04

(54) **Scheibenanordnung für eine Axiallageranordnung**

(30) Priorität: 14.12.2012 DE 102012024425
(71) Anmelder: GETRAG Getriebe- und Zahnradfabrik Hermann Hagenmeyer GmbH & Cie KG, 74199 Untergruppenbach (DE)
(72) Erfinder: Bochert, Bastian, 74360 Helfenberg (DE)
(74) Vertreter: Witte, Weller & Partner Patentanwälte mbB

(57) **Zusammenfassung**

Scheibenanordnung (21) für eine Axiallageranordnung (23), insbesondere in einem Kraftfahrzeuggetriebe (10), mit einem ersten Sektorelement (30) und wenigstens einem zweiten Sektorelement (32), die sich zu einer ringförmigen Sicherungsscheibe (22) ergänzen, wobei die Sicherungsscheibe (22) einen Innenumfang und einen Außenumfang aufweist, und mit einem Schließring, der um den Außenumfang der Sicherungsschreibe (22) herum angeordnet ist.

## Beschreibung

Die vorliegende Erfindung betrifft eine Scheibenanordnung für eine Axiallageranordnung, insbesondere in einem Kraftfahrzeuggetriebe, mit einem ersten Sektorelement und wenigstens einem zweiten Sektorelement, die sich zu einer ringförmigen Sicherungsscheibe ergänzen, wobei die Sicherungsscheibe einen Innenumfang und einen Außenumfang aufweist, und mit einem Schließring, der um den Außenumfang der Sicherungsscheibe herum angeordnet ist.

Ferner betrifft die vorliegende Erfindung eine Axiallageranordnung mit einer Welle, mit einem Bauteil, das an der Welle gelagert ist, und mit einer Scheibenanordnung, die in einer Nut der Welle aufgenommen ist, wobei die Scheibenanordnung benachbart zu dem Bauteil angeordnet ist, derart, dass Axialkräfte von dem Bauteil über die Scheibenanordnung in die Welle und/oder von der Welle über die Scheibenanordnung in das Bauteil leitbar sind.

Auf dem Gebiet der Fahrzeuggetriebe werden Axiallageranordnungen der oben genannten Art dazu verwendet, um bei einer Leistungsübertragung über schräg verzahnte Zahnräder die dabei entstehenden Axialkräfte in der Welle aufzunehmen.

Die in der Welle vorgesehene Nut ist dabei in der Regel eine umlaufende Ringnut. Die Scheibenanordnung besteht im Stand der Technik aus zwei halbringförmigen Scheiben, die radial in die Nut eingesetzt werden, wobei die axiale Scheibendicke gleich der axialen Nutbreite ist.

Um zu verhindern, dass sich diese halbringförmigen Sektorelemente im Betrieb bei drehender Welle aufgrund von Zentrifugalkräften aus der Nut lösen, wird ein Schließring axial über die Scheibenanordnung geschoben, der die Scheibenanordnung außenumfänglich umgibt.

Ferner ist es bekannt, auf die Welle Buchsen aufzupressen, die einen Flansch aufweisen, der die Scheibenanordnung bildet.

Scheibenanordnungen der oben beschriebenen Art werden auch als Anlaufscheiben bezeichnet.

Der Schließring derartiger Scheibenanordnungen wird dabei aus einem Metall hergestellt. Die Herstellung beinhaltet dabei, den Schließring aus einem Blech auszustanzen. Alternativ ist es bekannt, den Schließring durch eine spanende Bearbeitung (beispielsweise Drehen oder dergleichen) herzustellen.

Die Herstellung derartiger Schließringe ist daher mit hohem Kosten- und Materialaufwand verbunden. Beim Stanzen sind zudem fertigungsbedingt geometrische Grenzen gesetzt.

Vor diesem Hintergrund ist es eine Aufgabe der Erfindung, eine verbesserte Scheibenanordnung sowie eine verbesserte Axiallageranordnung anzugeben, die insbesondere kostengünstiger herstellbar ist.

Diese Aufgabe wird bei der eingangs genannten Scheibenanordnung dadurch gelöst, dass der Schließring aus einem Draht gewickelt ist.

Bei der oben genannten Axiallageranordnung wird die Aufgabe dadurch gelöst, dass die Scheibenanordnung eine Scheibenanordnung der erfindungsgemäßen Art ist.

Ein Schließring aus einem gewickelten Draht ist kostengünstig herstellbar. Zudem kann der Materialaufwand minimiert werden. Ferner können Schließringe mit geringen Toleranzen hergestellt werden.

Der Querschnitt des Drahtes kann ein runder oder elliptischer Querschnitt sein. Alternativ ist es möglich, dass der Querschnitt ein polygonaler Querschnitt ist. Die Sektorelemente sind vorzugsweise Gleichteile.

Die Aufgabe wird somit vollkommen gelöst.

Von besonderem Vorzug ist es, wenn der Schließring eine erste Windung aufweist, die sich um 360° erstreckt, und wenigstens eine zweite Windung aufweist, die in axialer Richtung benachbart zu der ersten Windung angeordnet ist und sich um wenigstens 180° erstreckt, so dass der Schließring über wenigstens 180° eine axiale Breite aufweist, die wenigstens der doppelten Dicke des Drahtes entspricht.

Hierbei kann ein Schließring mit einem sehr niedrigen Querschnitt bei einer großen Breite hergestellt werden. Insgesamt können so Axiallageranordnungen mit geringem radialem Bauraum hergestellt werden.

Von besonderem Vorteil ist es dabei, wenn die zweite Windung sich um wenigstens 270°, insbesondere um wenigstens 330° erstreckt.

Hierdurch kann die Stabilität des Schließringes noch weiter erhöht werden.

Generell ist es auch möglich, dass der Schließring mehr als zwei Windungen aufweist, beispielsweise drei Windungen, von denen sich zwei um 360° erstrecken und eine dritte Windung sich um wenigstens 180° erstreckt.

Gemäß einer weiteren bevorzugten Ausführungsform weist die erste Windung einen gekröpften Windungsabschnitt auf.

Hierdurch ist es möglich, die axiale Breite des Schließringes auf die doppelte (bzw. mehrfache) Dicke des Drahtes zu begrenzen. Mit anderen Worten kann der Schließring über den gesamten Umfang eine weitgehend einheitliche axiale Breite aufweisen.

Die Enden des Drahtes sind in einer Variante nicht mit anderen Drahtabschnitten verbunden.

Gemäß einer insgesamt bevorzugten Ausführungsform ist jedoch ein erstes Ende des Drahtes mit einem benachbarten ersten Drahtabschnitt des Drahtes verbunden, und/oder ein zweites Ende des Drahtes ist mit einem benachbarten zweiten Drahtabschnitt des Drahtes verbunden.

Hierdurch kann die Stabilität des Schließringes erhöht werden, insbesondere kann die Aufweitbarkeit des Schließringes in radialer Richtung begrenzt werden.

Dabei ist es von Vorteil, wenn die Verbindung des ersten Endes mit dem ersten Drahtabschnitt und/oder die Verbindung des zweiten Endes mit dem zweiten Drahtabschnitt eine Schweißverbindung, eine Lötverbindung und/oder eine Klebeverbindung aufweist.

Der Schließring wird vorzugsweise aus einem Metall hergestellt, vorzugsweise aus einem Federstahl. In diesem Fall ist eine Schweißverbindung von besonderem Vorzug.

Die Sektorelemente können wie im Stand der Technik jeweils einfache halbringförmige Sektorelemente sein.

Generell ist es auch möglich, dass die Sektorelemente an ihren Enden so ausgebildet sind, dass sie im Wesentlichen verliersicher miteinander gekoppelt sind.

Bei dieser Ausführungsform muss der Schließring nur eine Zusatzsicherung bilden. Mit anderen Worten können Teile der Kräfte, die aufgrund von Zentrifugalkräften auftreten und die Sektorelemente in radialer Richtung nach außen drücken, zum Teil von den Kopplungen der Sektorelemente aufgenommen werden, und zum Teil von dem Schließring. Die Scheibenanordnung kann auch so ausgestaltet sein, dass der Schließring im Betrieb einer Axiallageranordnung im Wesentlichen keine radialen Kräfte aufnehmen muss und folglich lediglich als "Sicherungsring" dient.

In einer Variante weist das erste Sektorelement dabei eine erste Verbindungsfläche mit einem ersten Vorsprung auf, wobei das zweite Sektorelement eine erste Verbindungsgegenfläche mit einer ersten Ausnehmung aufweist, in die der erste Vorsprung greift, und zwar derart, dass das erste und das zweite Sektorelement verliersicher miteinander gekoppelt sind.

In einer alternativen Ausführungsform weist ein erstes Ende von jedem Sektorelement eine Rastnase auf, wobei ein zweites Ende von jedem Sektorelement eine Rastnut aufweist und wobei die Sektorelemente zur Bildung einer Sicherungsscheibe so miteinander verbindbar sind, dass die Rastnase des ersten Sektorelementes in die Rastnut des zweiten Sektorelementes einrastet, wobei die Verrastung so ausgebildet ist, dass die Sektorelemente verliersicher miteinander gekoppelt sind.

Die verliersichere Kopplung bezieht sich insbesondere auf eine Verliersicherheit in radialer Richtung.

Bei der erfindungsgemäßen Axiallageranordnung kann die axiale Breite der Nut gleich der axialen Breite der Sektorelemente bzw. der Scheibenanordnung sein. In diesem Fall werden die Sektorelemente radial in die Nut eingesetzt, wobei der Schließring anschließend über die so hergestellte Sicherungsscheibe axial aufschiebbar ist.

In einer bevorzugten Ausgestaltung ist eine axiale Nutbreite größer als eine axiale Dicke der Scheibenanordnung, wobei die Axiallageranordnung ferner ein Ringteil aufweist, das axial benachbart zu der Scheibenanordnung in die Nut eingesetzt ist, derart, dass Axialkräfte von dem Bauteil über die Scheibenanordnung und das Ringteil in die Welle und/oder von der Welle über das Ringteil und die Scheibenanordnung in das Bauteil leitbar sind.

Bei dieser Ausführungsform ist es zum einen möglich, dass die Sektorelemente zur Bildung einer verliersicheren Kopplung axial ineinander geschoben werden, wobei in diesem Fall die axiale Nutbreite wenigstens der doppelten Breite der Scheibenanordnung entspricht.

Auf diese Weise können insbesondere Scheibenanordnungen mit verliersicheren Kopplungen realisiert werden. Nach dem axialen Zusammensetzung der Sektorelemente kann dann das Ringteil in die Nut eingesetzt werden, um diese "auszufüllen" und folglich eine Übertragbarkeit von Axialkräften von dem Bauteil in die Welle zu ermöglichen.

Von besonderem Vorteil ist es dabei, wenn das Ringteil ein offenes Ringteil ist, das radial in die Nut eingesetzt ist.

Die Ausgestaltung mit einer axialen Nutbreite größer als die axiale Dicke der Scheibenanordnung hat ferner den Vorteil, dass die Scheibenanordnung zumindest teilweise in axialer Richtung innerhalb einer axialen Ausnehmung in dem Bauteil angeordnet sein kann. Hierdurch kann der axiale Abstand zwischen dem Bauteil und einem hierzu benachbarten weiteren, an der Welle gelagerten Bauteil verringert werden.

Ferner ergibt sich bei einer derartigen Anordnung der Scheibenanordnung innerhalb einer axialen Ausnehmung des Bauteils eine zusätzliche Verliersicherung in radialer Richtung.

Auch bei dieser Ausführungsform ist es jedoch von Vorteil, wenn der Schließring vorgesehen ist, da der Schließring bei dieser Ausführungsform sich in Drehrichtung mit der Sicherungsscheibe mitdrehen kann und folglich geringe Reibungskräfte auftreten. Das Bauteil und die Sicherungsscheibe können hingegen unterschiedliche Drehzahlen aufweisen, so dass eine Radialsicherung allein mittels eines Innenumfanges einer Axialausnehmung in dem Bauteil zu höheren Reibverlusten führen könnte.

Der gekröpfte Windungsabschnitt der ersten Windung ist vorzugsweise ein axialgekröpfter Windungsabschnitt und ist vorzugsweise als doppelt gekröpfter Windungsabschnitt ausgebildet, derart, dass die zweite Windung, die sich an dem gekröpften Windungsabschnitt anschließt, direkt benachbart zu der ersten Windung angeordnet sein kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Getriebeanordnung mit einer erfindungsgemäßen Axiallageranordnung;
- Fig. 2: eine Sicherungsscheibe für eine Axiallageranordnung in einer axialen Draufsicht;
- Fig. 3: eine weitere schematische Längsschnittansicht durch eine Getriebeanordnung mit einer weiteren Ausführungsform einer erfindungsgemäßen Axiallageranordnung;
- Fig. 4: eine Sicherungsscheibe für eine Axiallageranordnung in einer axialen Draufsicht;
- Fig. 5: eine axiale Draufsicht auf eine Ausführungsform eines Schließringes für eine erfindungsgemäße Scheibenanordnung bzw. eine erfindungsgemäße Axiallageranordnung;
- Fig. 6: eine Schnittansicht entlang der Linie VI-VI der Fig. 5;
- Fig. 7: eine radiale Draufsicht auf den Schließring der Fig. 5 und 6;
- Fig. 8: eine radiale Draufsicht auf eine alternative Ausführungsform eines erfindungsgemäßen Schließringes; und
- Fig. 9: eine weitere schematische Längsschnittansicht durch eine Getriebeanordnung mit einer weiteren Ausführungsform einer erfindungsgemäßen Axiallageranordnung.

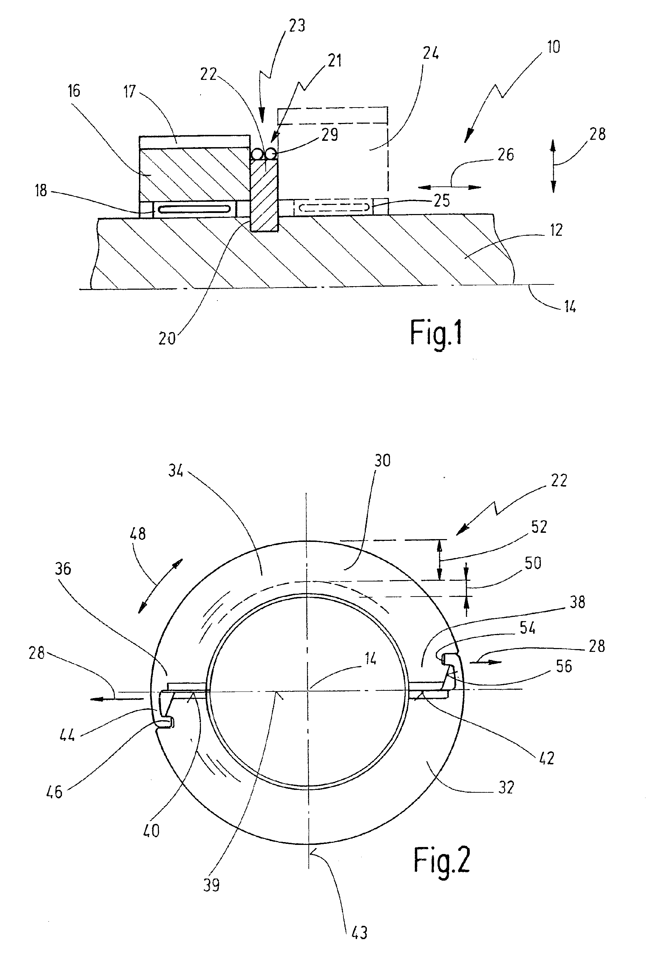

In Fig. 1 ist eine Getriebeanordnung, insbesondere in Form eines Teiles eines Kraftfahrzeuggetriebes, in einer schematischen Längsschnittansicht dargestellt und generell mit 10 bezeichnet.

Die Getriebeanordnung 10 weist eine Welle 12 mit einer Längsachse 14 auf. An der Welle 12 ist ein erstes Losrad 16, das eine Schrägverzahnung 17 aufweist, mittels eines ersten Losradlagers 18 drehbar gelagert.

Auf einer axialen Seite benachbart zu dem ersten Losrad 16 ist in der Welle 12 eine um 360° umlaufende Radialnut 20 ausgebildet. In die Radialnut 20 ist eine Sicherungsscheibe 22 als Anlaufscheibe eingesetzt, wobei die Sicherungsscheibe 22 Teil einer Scheibenanordnung 21 ist. Hierdurch wird eine Axiallageranordnung 23 gebildet, mittels der Axialkräfte, die durch einen Verzahnungseingriff erfolgen, von dem Losrad 16 über die Sicherungsscheibe 22 in die Welle 12 eingeleitet werden können. Die Sicherungsscheibe 22 ist dabei als Ringscheibe ausgebildet und weist einen radial innen liegenden Eingriffsabschnitt auf, der in der Radialnut aufgenommen ist, sowie einen Anlageabschnitt, der dazu ausgelegt ist, auf einer axialen Seite in Anlage an eine axiale Endseite des Losrades 12 zu treten, um die Axialkräfte von dem Losrad 16 in die Welle 12 leiten zu können.

In Fig. 1 ist ferner ein gegebenenfalls an der Welle 12 gelagertes zweites Losrad 24 dargestellt. Das zweite Losrad 24 ist mittels eines zweiten Losradlagers 25 drehbar an der Welle 12 gelagert und weist eine axiale Endseite auf, die an der Sicherungsscheibe 22 anliegt (auf der dem Losrad 16 gegenüberliegenden Seite). Hierdurch können gegebenenfalls Axialkräfte auch von dem zweiten Losrad 24 über die Sicherungsscheibe 22 in die Welle 12 eingeleitet werden.

In Fig. 1 ist ferner eine zur Längsachse 14 parallele Axialrichtung bei 26 gezeigt, und eine hierzu senkrechte Radialrichtung ist bei 28 gezeigt.

Die Sicherungsscheibe 22 ist vorliegend durch wenigstens zwei Sektorelemente gebildet, die zu einer Kreisform verbindbar sind. Hierdurch ist es möglich, die Sektorelemente von radial gegenüberliegenden Seiten in die Radialnut 20 einzuschieben.

Die Scheibenanordnung 21 beinhaltet ferner einen Schließring 29. Der Schließring 29 ist um den Außenumfang der Sicherungsscheibe 22 herum angeordnet und verhindert, dass sich die zwei Sektorelemente in radialer Richtung aus der Ringnut heraus lösen, insbesondere dann, wenn die Welle 12 in Drehung versetzt wird und folglich Zentrifugalkräfte auf die Sektorelemente wirken.

Die Sektorelemente können in weiteren Varianten, wie sie nachstehend beschrieben sind, auch mit Koppelelementen versehen sein, so dass die zwei Sektorelemente auch ohne Schließring 29 verliersicher miteinander gekoppelt sind. In diesem Fall kann der Schließring 29 als zusätzlicher Sicherungsring dienen. Alternativ können die auftretenden Zentrifugalkräfte sowohl von den Koppelmitteln als auch von dem Schließring 29 aufgenommen werden.

Der Schließring 29 ist vorliegend aus einem Draht gewickelt und weist zwei Windungen auf, die in axialer Richtung nebeneinander angeordnet sind. Hierdurch kann der Schließring eine relativ große Breite bezogen auf die radiale Dicke aufweisen.

In Fig. 2 ist ein Beispiel einer Sicherungsscheibe 22 gezeigt, die Koppelmittel zum verliersicheren Festlegen der Sektorelemente aneinander aufweist.

Die Sicherungsscheibe 22 der Fig. 2 weist ein erstes Sektorelement 30 und ein zweites Sektorelement 32 auf. Die Sektorelemente 30, 32 sind identisch ausgebildet. Im Folgenden wird lediglich das Sektorelement 30 erläutert, wobei sich diese Erläuterungen in gleicher Weise auf das zweite Sektorelement 32 beziehen.

Das Sektorelement 30 weist einen halbringförmigen Grundkörper 34 mit einem ersten Ende 36 und einem zweiten Ende 38 auf. Der Grundkörper ist dabei als flacher Ringscheibenkörper ausgebildet, der beispielsweise aus einem Blechmaterial ausgestanzt sein kann.

Das Sektorelement 30 erstreckt sich im Wesentlichen über einen Umfangsbereich von 180°, so dass die zwei Sektorelemente 30, 32 zusammen die ringförmige Sicherungsscheibe 22 bilden können.

Die Sicherungsscheibe 22 weist eine erste Hauptachse 39 auf, die durch einen Mittelpunkt der Sicherungsscheibe 22 hindurch verläuft. Die Stirnseiten der zwei Enden 36, 38 sind entlang dieser ersten Hauptachse 39 ausgerichtet. An dem ersten Ende 36 ist dabei eine erste Verbindungsfläche 40 ausgebildet. An dem zweiten Ende 38 ist eine zweite Verbindungsfläche 42 ausgebildet. Die Verbindungsflächen 40, 42 sind in radialer Richtung parallel zu der ersten Hauptachse 39 ausgerichtet.

Die Sicherungsscheibe 22 weist ferner eine zweite Hauptachse 43 auf, die durch den Mittelpunkt der Sicherungsscheibe 22 verläuft und senkrecht zu der ersten Hauptachse 39 ausgerichtet ist.

Das Sektorelement 30 weist eine Rastnasenzunge 44 auf, die sich von der ersten Verbindungsfläche 40 in Umfangsrichtung erstreckt. Die Rastnasenzunge 44 ist dabei im Bereich des Außenumfanges des Grundkörpers 34 ausgebildet. Eine radiale Außenseite der Rastnasenzunge 44 geht stetig in den Außenumfang des Grundkörpers 34 über. Am freien Ende der Rastnasenzunge 44 ist eine Rastnase 46 ausgebildet, die sich radial nach innen erstreckt.

Eine Umfangsrichtung ist in Fig. 2 bei 48 gezeigt.

Die Sicherungsscheibe 22 weist einen radial inneren ringförmigen Eingriffsabschnitt 50 auf, der dazu ausgebildet ist, in eine Radialnut 20 einer Welle 12 eingesetzt zu werden. Ferner weist die Sicherungsscheibe 22 einen radial außen liegenden Anlageabschnitt 52 auf, der zur axialen Anlage an einem Bauteil wie einem Losrad 16 ausgebildet ist.

Die Rastnasenzunge 44 ist in radialer Richtung gesehen im Bereich des Anlageabschnittes 52 ausgebildet, jedenfalls radial gesehen außerhalb des Eingriffsabschnittes.

Das zweite Ende 38 des Grundkörpers 34 des Sektorelementes 30 weist eine Rastnut 54 auf. Die Rastnut 54 erstreckt sich von einem Außenumfang des Grundkörpers 34 in radialer Richtung nach innen. Die Rastnut 54 ist gegenüber der zweiten Verbindungsfläche 42 in Umfangrichtung versetzt. Zwischen der Rastnut 54 und der zweiten Verbindungsfläche 42 ist eine Einführschräge 56 ausgebildet.

Die Sektorelemente 30, 32 werden, wie gesagt als Gleichteile hergestellt. Zur Herstellung der Sicherungsscheibe 22 werden die Sektorelemente 30, 32 in radialer Richtung aufeinander zu unter Einschluss der Welle 12 in die Radialnut 20 eingeschoben, und zwar entlang der zweiten Hauptachse 43. Hierbei gelangen die Rastnasen 46 im Bereich der zweiten Verbindungsflächen 42 an die Einführschrägen 56, so dass die Rastnasenzungen 44 beim weiteren radialen Zusammendrücken in radialer Richtung ausgelenkt werden, was in Fig. 2 bei 28 angedeutet ist. Schließlich gelangen die Rastnasen 46 in den Bereich der Rastnuten 54, in die die Rastnasen aufgrund der federelastischen Eigenschaft der Rastnasenzungen 44 einschnappen. In dieser Position liegen die ersten Verbindungsflächen 40 an den zweiten Verbindungsflächen 42 an. Hierdurch wird eine stabile Verrastung der Sektorelemente 30, 32 aneinander in Umfangsrichtung gewährleistet. Dadurch, dass der Eingriffsabschnitt 50 in diesem Zustand in der Radialnut 20 angeordnet ist, wird eine Verliersicherheit der Sektorelemente erzielt.

Durch den Rasteingriff der Rastnasen 46, die die Rastnuten 54 hintergreifen, wird eine Verliersicherheit insbesondere auch in radialer Richtung erreicht.

In einer alternativen Ausführungsform, die in Fig. 2 nicht dargestellt ist, können die Rastnasenzungen anstelle in radialer Richtung auch in axialer Richtung auslenkbar sein, wobei sich Rastnuten in diesem Fall an den zweiten Enden in axialer Richtung erstrecken.

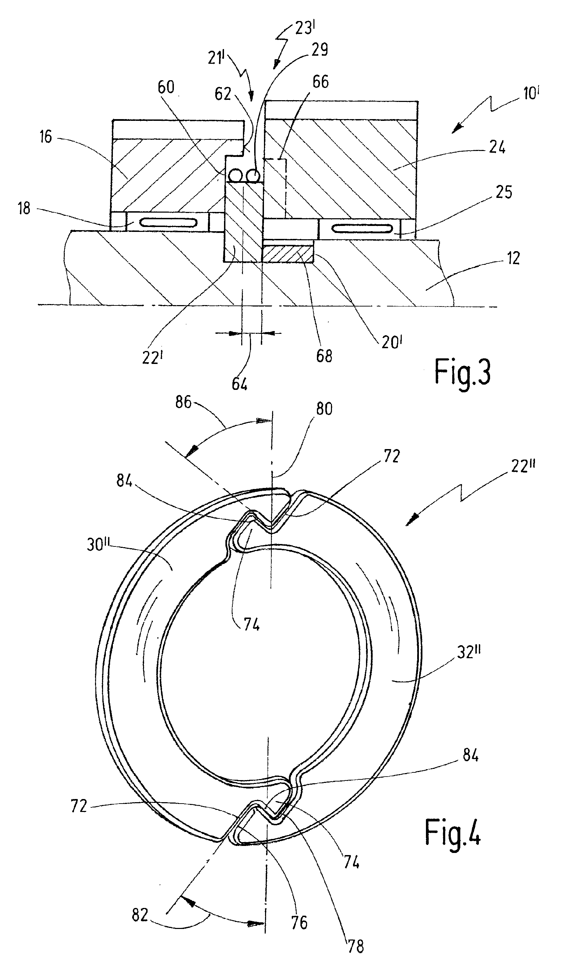

In Fig. 3 ist eine weitere Ausführungsform einer Getriebeanordnung dargestellt, die hinsichtlich Aufbau und Funktionsseite generell der Getriebeanordnung 10 der Fig. 1 entspricht und generell mit 10' bezeichnet ist. Gleiche Elemente sind daher durch gleiche Bezugszeichen beschrieben. Im Folgenden werden im Wesentlichen die Unterschiede erläutert.

Bei der Getriebeanordnung 10' der Fig. 3 weist das erste Losrad 16 eine Axialausnehmung 60 auf, die gegenüber einer Stirnfläche 62 des Losrades 16 zurückversetzt ist. Die Sicherungsscheibe 22' ist bei dieser Ausführungsform so in die Radialnut 20' eingesetzt, dass die Sicherungsscheibe 22' in axialer Richtung zumindest teilweise in der Axialausnehmung 60 aufgenommen ist. Hierdurch kann der axiale Abstand 64 zwischen dem ersten Losrad 16 und dem zweiten Losrad 24 verringert werden. In dem zweiten Losrad 24 kann gegebenenfalls eine entsprechende optionale Axialausnehmung 66 ausgebildet sein.

Ferner ist bei der Ausführungsform der Fig. 3 die Radialnut 20 in axialer Richtung breiter als die Sicherungsscheibe 22'. Genauer gesagt ist die axiale Breite der Radialnut 20' vorzugsweise doppelt so groß wie die axiale Dicke der Sicherungsscheibe 22".

Bei der in Fig. 3 gezeigten Axiallageranordnung 23' kann die Sicherungsscheibe 22" wiederum aus wenigstens zwei Sektorelementen hergestellt sein, die axial benachbart zu dem ersten Losrad 16 in der Radialnut 20' zusammengeführt werden und anschließend in axialer Richtung in die Axialausnehmung 60 hineingeschoben werden. Anschließend wird in der Radialnut 20' ein Ringteil 68 aufgenommen. Demzufolge können Axialkräfte von dem ersten Losrad 16 über die Sicherungsscheibe 22' und das Ringteil 68 in die Welle 12 eingeleitet werden. Obgleich dadurch, dass die Sicherungsscheibe 22" zumindest teilweise in der Axialausnehmung 60 aufgenommen ist, eine gewisse Verliersicherheit bereits durch den Innenumfang der Axialausnehmung 60 erzielt werden kann, ist vorzugsweise zusätzlich zwischen dem Außenumfang der Sicherungsscheibe 22" und dem Innenumfang der Axialausnehmung 60 ein Schließring 29 eingesetzt, der wiederum aus Draht gewickelt sein kann, wie bei der Ausführungsform der Fig. 1.

In Fig. 4 ist eine alternative Ausführungsform einer Sicherungsscheibe 22" gezeigt, die bei Axiallageranordnung 23' der Fig. 3 alternativ zu der Sicherungsscheibe 22 der Fig. 2 verwendbar ist.

Die Sicherungsscheibe 22" weist ebenfalls ein erstes Sektorelement 30" und ein zweites Sektorelement 32" auf. Die Sektorelemente 30", 32" sind an ihren Enden mit Vorsprüngen bzw. Ausnehmungen versehen, so dass die Sektorelemente zum Bilden der Sicherungsscheibe 22" axial ineinander geschoben werden müssen, wobei auf diese Weise gleichzeitig eine radiale Verliersicherheit erzielt wird.

Genauer gesagt weist das erste Sektorelement 30" an einem Ende eine erste Verbindungsfläche 72 auf, an der ein erster Vorsprung 74 ausgebildet ist. In entsprechender Weise weist das zweite Sektorelement 32" an einem zugeordneten Ende eine erste Verbindungsgegenfläche 76 auf, an der eine Ausnehmung 78 ausgebildet ist.

Eine Mitten- bzw. Hauptachse 80 verläuft in Entsprechung zu der ersten Hauptachse 39 durch diese Koppelabschnitte hindurch. Die Verbindungsfläche 72 und die Verbindungsfläche 76 sind dabei unter einem Winkel 82 in Bezug auf die Mittenachse 80 ausgerichtet, der größer ist als 0° und kleiner als 90°.

Der Vorsprung 74 weist eine quer zu der Verbindungsfläche 72 ausgerichtete Querfläche 84 auf, die unter einem Winkel 86 in Bezug auf die Mittenachse 80 ausgerichtet ist, wobei der Winkel 86 ebenfalls vorzugsweise größer ist als 0° und vorzugsweise kleiner als 90°.

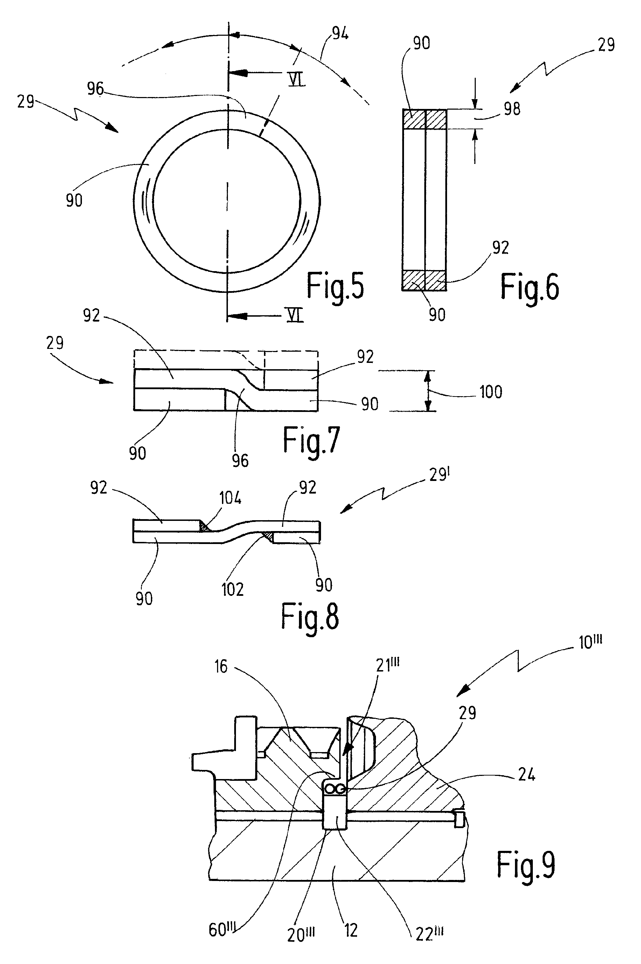

In den Fig. 5 bis 7 ist eine Ausführungsform eines Schließringes 29 gezeigt, der für sämtliche der oben genannten Scheibenanordnungen 21 bzw. Axiallageranordnungen 23 geeignet ist.

Der Schließring 29 ist aus einem Draht gewickelt, bei dem es sich um einen Metalldraht, insbesondere um einen Federdraht handeln kann. Der Querschnitt des Drahtes ist in den Fig. 5 bis 7 polygonal (z.B. quadratisch), kann jedoch auch, wie es in Fig. 1 und 3 angedeutet ist, kreisrund oder auch elliptisch sein.

Der Draht ist zur Herstellung des Schließringes 29 so gewickelt, dass eine erste Windung 90 sich um 360° erstreckt und eine zweite Windung 92 sich um wenigstens 180°, im vorliegenden Fall etwa über einen Winkelbereich 94 von 330° erstreckt.

Die erste Windung 90 weist dabei einen doppelt gekröpften Windungsabschnitt 86 auf, an dessen Ende sich die zweite Windung 92 anschließt.

Die zwei Windungen 90, 92 sind folglich in axialer Richtung benachbart zueinander angeordnet, so dass der so hergestellte Schließring 29 eine axiale Breite 100 aufweist, die doppelt so groß ist wie die Drahtdicke 98, die in Fig. 6 angedeutet ist.

Der Schließring 29 kann hergestellt werden, indem der Draht um einen Dorn gebogen wird.

Die Enden des Drahtes können dabei frei liegen.

In Fig. 7 ist eine alternative Ausführungsform gezeigt, bei der die Enden des Drahtes an jeweiligen Verbindungen 102, 104 mit axial benachbarten Drahtabschnitten verbunden sind, beispielsweise durch eine Schweißverbindung, durch eine Klebeverbindung oder dergleichen.

In Fig. 9 ist eine weitere Ausführungsform einer Getriebeanordnung 10"' gezeigt, die hinsichtlich Aufbau und Funktionsweise den oben beschriebenen Getriebeanordnungen entspricht.

Hierbei ist die axiale Breite der Radialnut 20"' gleich der axialen Dicke der Sicherungsscheibe 22"'. Um den Außenumfang der Sicherungsscheibe 22"' ist ein Schließring 29 der oben beschriebenen Art angeordnet. Die so gebildete Scheibenanordnung 21"' ist nahezu vollständig in einer Axialausnehmung 60"' des ersten Losrades 16 angeordnet, so dass der axiale Abstand zwischen dem ersten Losrad 16 und dem zweiten Losrad 24 klein ausgebildet sein kann.

Der radiale Außendurchmesser des Schließringes 29 ist vorzugsweise kleiner als der Innenumfang der Axialausnehmung 60"'.

Obgleich oben Sicherungsscheiben 22 bestehend aus zwei Sektorelementen dargestellt sind, versteht sich, dass die Sicherungsscheiben auch aus drei oder mehr Sektorelementen hergestellt sein können, die sich zu einer Kreisform ergänzen.

## Patentansprüche

1. Scheibenanordnung (21) für eine Axiallageranordnung (23), insbesondere in einem Kraftfahrzeuggetriebe (10), mit einem ersten Sektorelement (30) und wenigstens einem zweiten Sektorelement (32), die sich zu einer ringförmigen Sicherungsscheibe (22) ergänzen, wobei die Sicherungsscheibe (22) einen Innenumfang und einen Außenumfang aufweist, und mit einem Schließring, der um den Außenumfang der Sicherungsschreibe (22) herum angeordnet ist,
**dadurch gekennzeichnet, dass**
der Schließring (29) aus einem Draht gewickelt ist.

2. Scheibenanordnung nach Anspruch 1, **dadurch gekennzeichnet, dass** der Schließring (29) eine erste Windung (90) aufweist, die sich um 360° erstreckt, und wenigstens eine zweite Windung (92) aufweist, die in axialer Richtung benachbart zu der ersten Windung (90) angeordnet ist und sich um wenigstens 180° erstreckt, so dass der Schließring (29) über wenigstens 180° eine axiale Breite (100) aufweist, die wenigstens der doppelten Dicke (98) des Drahtes entspricht.

3. Scheibenanordnung nach Anspruch 2, **dadurch gekennzeichnet, dass** die zweite Windung (92) sich um wenigstens 270°, insbesondere um wenigstens 330° erstreckt.

4. Scheibenanordnung nach Anspruch 2 oder 3, **dadurch gekennzeichnet, dass** die erste Windung (90) einen gekröpften Windungsabschnitt (96) aufweist.

5. Scheibenanordnung nach einem der Ansprüche 1 - 4, **dadurch gekennzeichnet, dass** ein erstes Ende des Drahtes mit einem benachbarten ersten Drahtabschnitt des Drahtes verbunden ist und/oder ein zweites Ende des Drahtes mit einem benachbarten zweiten Drahtabschnitt des Drahtes verbunden ist.

6. Scheibenanordnung nach Anspruch 5, **dadurch gekennzeichnet, dass** die Verbindung (102) des ersten Endes mit dem ersten Drahtabschnitt und/oder die Verbindung (104) des zweiten Endes mit dem zweiten Drahtabschnitt eine Schweißverbindung, eine Lötverbindung und/oder eine Klebeverbindung aufweist.

7. Scheibenanordnung nach einem der Ansprüche 1 - 6, **dadurch gekennzeichnet, dass** das erste Sektorelement (30") eine erste Verbindungsfläche (72) mit einem ersten Vorsprung (74) aufweist, wobei das zweite Sektorelement (32") eine erste Verbindungsgegenfläche (76) mit einer ersten Ausnehmung (78) aufweist, in die der erste Vorsprung (74) greift, derart, dass das erste und das zweite Sektorelement (30", 32") verliersicher miteinander gekoppelt sind.

8. Scheibenanordnung nach einem der Ansprüche 1 - 6, **dadurch gekennzeichnet, dass** ein erstes Ende von jedem Sektorelement (30, 32) eine Rastnase (46) aufweist, wobei ein zweites Ende von jedem Sektorelement (30, 32) eine Rastnut (54) aufweist und wobei die Sektorelemente (30, 32) zur Bildung einer Sicherungsscheibe (22) so miteinander verbindbar sind, dass die Rastnase (46) des ersten Sektorelementes (30) in die Rastnut (54) des zweiten Sektorelementes (32) einrastet, wobei die Verrastung so ausgebildet ist, dass die Sektorelemente (30, 32) verliersicher miteinander gekoppelt sind.

9. Axiallageranordnung (23) mit einer Welle (12), mit einem Bauteil (16), das an der Welle (12) gelagert ist, und mit einer Scheibenanordnung (21), die in einer Nut (20) der Welle (12) aufgenommen ist, wobei die Scheibenanordnung (21) benachbart zu dem Bauteil (16) angeordnet ist, derart, dass Axialkräfte von dem Bauteil (16) über die Scheibenanordnung (21) in die Welle (12) und/oder von der Welle (12) über die Scheibenanordnung (21) in das Bauteil (16) leitbar sind, **dadurch gekennzeichnet, dass** die Scheibenanordnung eine Scheibenanordnung nach einem der Ansprüche 1 - 8 ist.

10. Axiallageranordnung (23) nach Anspruch 9, **dadurch gekennzeichnet, dass** eine axiale Nutbreite größer ist als eine axiale Dicke der Scheibenanordnung (22'), wobei die Axialanordnung (23) ferner ein Ringteil (68) aufweist, das axial benachbart zu der Scheibenanordnung (22') in die Nut (20') eingesetzt ist, derart, dass Axialkräfte von dem Bauteil (16) über die Scheibenanordnung (22') und das Ringteil (68) in die Welle (12) und/oder von der Welle (12) über das Ringteil (22') und die Scheibenanordnung (22') in das Bauteil (16) leitbar sind.

11. Axiallageranordnung nach Anspruch 10, **dadurch gekennzeichnet, dass** das Ringteil (68) ein offenes Ringteil ist, das radial in die Nut (20)') eingesetzt ist.
